# EUROPÄISCHE PATENTSCHRIFT

(11) **EP 2 893 184 B1**
(45) Veröffentlichungstag und Bekanntmachung des Hinweises auf die Patenterteilung: **26.12.2018**
(21) Anmeldenummer: 13762980.4
(22) Anmeldetag: 10.09.2013
(51) Int. Cl.: F03D 1/02, F03D 7/02

(54) **WINDTURBINE**
WIND TURBINE
ÉOLIENNE

(30) Priorität: 10.09.2012 CH 16472012
(43) Veröffentlichungstag der Anmeldung: 15.07.2015
(73) Patentinhaber: Wepfer Technics AG, 8450 Andelfingen (CH)
(72) Erfinder: WEPFER, Hans, CH-8471 Berg-Dägerlen (CH)
(74) Vertreter: Keller & Partner Patentanwälte AG
(86) Internationale Anmeldenummer: PCT/CH2013/000161
(87) Internationale Veröffentlichungsnummer: WO 2014/036665

(56) Entgegenhaltungen:
- WO-A1-99/02856
- BE-A3- 1 017 434
- DE-A1- 19 714 512
- DE-A1-102009 040 648
- FR-A1- 2 413 566
- FR-A1- 2 568 948
- GB-A- 2 443 886
- NL-C2- 1 029 060

## Beschreibung

### Stand der Technik

Als Stromerzeuger sind Windturbinen schon seit längerem bekannt. Leistungsfähige Windturbinen folgen einer einfachen Regel, Nabenhöhe und Rotorkreis möglichst gross zu gestalten. Sichtbarkeit, Lärm und Schattenwurf sind enorm. Durch diese Tatsache werden die Windturbinen immer weiter weg von der Zivilisation aufgestellt, sei dies On- oder Offshore. Die daraus resultierenden, sehr langen Erschliessungswege inklusive Service und Unterhaltungskosten sind alles andere als Ressourcen- und Kosten schonend.

Aufgabe der Erfindung ist es, eine Windturbinenanlage so zu gestalten, dass diese nahe an die Zivilisation gebaut werden kann und somit Ressourcen und Kosten sparend ist. Erreicht wird das mit einer flachen, rotorkreisreduzierten und modularen Bauweise.

Beispiele von Windturbinen sind aus den Druckschriften GB 2 443 886 sowie DE 10 2009 040 648 bekannt.

### Darstellung der Erfindung

Ein Aspekt der vorliegenden Erfindung betrifft eine Windturbinenanlage mit einem Turbinenträger auf Turmstützen. Auf dem Turbinenträger sind mindestens zwei Windturbinen vorgesehen. Die Windturbinen sind drehbar mit einem Drehgestell auf einer Turmkonsole gelagert.

In einer besonderen Ausführungsform ist die Windturbinenanlage so ausgestaltet, dass sich der Turbinenträger über das Drehgestell um die vertikale Achse drehen kann.

In einer besonderen Ausführungsform ist der Turbinenträger so ausgestaltet, dass er eine Drehung um die vertikale Achse zur Windnachführung Yaw zur Windrichtung steuern kann. Bevorzugt weist diese Ausführungsform weiter einen Windsensor zur Erfassung der Windrichtung und einen Positionsmotor zur Drehung des Turbinenträgers über das Drehgestell auf.

In einer besonderen Ausführungsform ist der Turbinenträger mit der Turbine so ausgestaltet, dass er mit einem Antrieb absenkbar ist. In dieser Ausführungsform sind die Turmstützen gelenkig und als Parallelogramm ausgestaltet.

In einer besonderen Ausführungsform ist eine Nickachse der Turbine mittels einer Längenverstellung über die Turmstütze einstellbar ausgestaltet.

In einer besonderen Ausführungsform der vorliegenden Erfindung sind Turbinenträger, Turmstützen und Turbinen modular nach Baukastenprinzip ausgestaltet.

In einer besonderen Ausführungsform sind die Turmstützen im Zwischenraum der Rotorkreise der Windturbinen angeordnet.

In einer besonderen Ausführungsform ist die Windturbinenanlage so ausgestaltet, dass die Windnachführung Yaw die Windkraft selbst über einen Drehpunkt übernimmt. In einer weiteren, besonderen Ausführungsform weist die Windturbinenanlage drei zueinander versetzte Turbinen auf, eine linke Turbine, eine rechte Turbine und eine mittige Turbine. Die mittige Turbine ist beim Drehpunkt angeordnet und die vorderste Turbine. Die linke und die rechte Turbine flankieren die mittige Turbine und sind in der Windrichtung nach hinten versetzt.

In einer besonderen Ausführungsform ist die Windturbinenanlage so ausgestaltet, dass sie über die Turmkonsole On- sowie Offshore einsetzbar ist.

In einer besonderen Ausführungsform ist die Windturbinenanlage so ausgestaltet, dass sie über die Turmkonsole auf einem Schiff einsetzbar ist. Ein weiterer Aspekt der vorliegenden Erfindung betrifft die Verwendung einer wie oben geschilderten Windturbinenanlage auf einem Schiff.

### Kurze Beschreibung der Zeichnungen

Aus der nachfolgenden Detailbeschreibung und der Gesamtheit der Patentansprüche ergeben sich weitere vorteilhafte Ausführungsformen und Merkmalskombinationen der Erfindung.

Die zur Erläuterung des Ausführungsbeispiels verwendeten Zeichnungen zeigen:
- Fig. 1: zeigt eine erfindungsgemässe Windturbinenanlage mit einer möglichen Anordnung von zwei Windturbinen in Frontansicht.
- Fig. 2: zeigt eine erfindungsgemässe Windturbinenanlage in Seitenansicht.
- Fig. 3: zeigt eine erfindungsgemässe Windturbinenanlage in Seitenansicht mit Absenkung.
- Fig. 4: zeigt eine erfindungsgemässe Windturbinenanlage mit einer möglichen Anordnung von sieben Windturbinen in Frontansicht.
- Fig. 5: zeigt eine erfindungsgemässe Windturbinenanlage in Draufsicht.

Grundsätzlich sind in den Figuren gleiche Teile mit gleichen Bezugszeichen versehen.

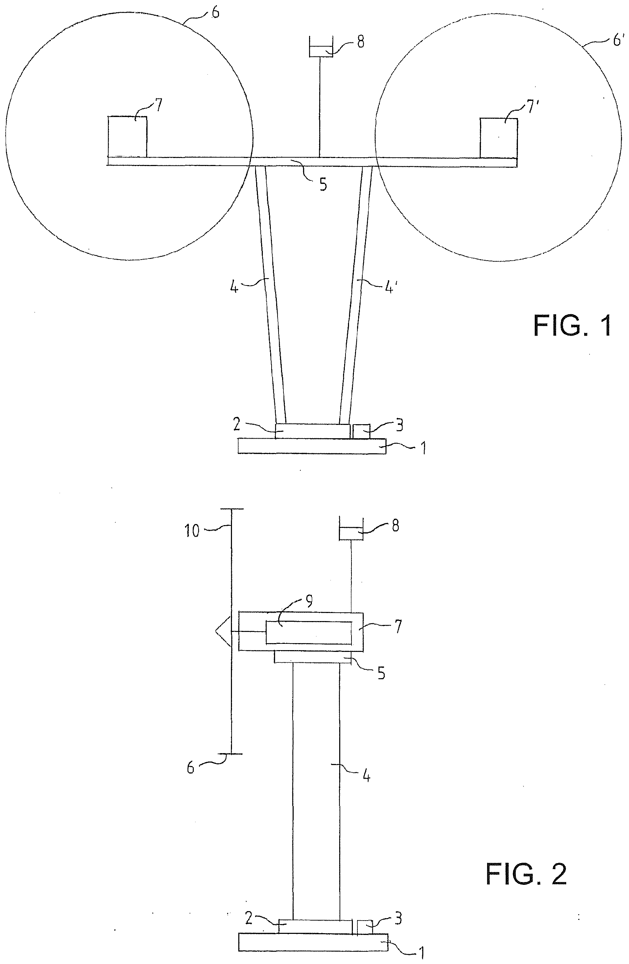

Die Fig. 1 zeigt eine Turbinenanlage, wo gemäss einer Ausführungsform zwei Windturbinen 7, 7' auf einem horizontalen Turbinenträger 5 montiert sind. Mit einer Turmstütze 4, 4' wird ein Turbinenträger 5 mit einem Drehgestell 2 verbunden. Das Drehgestell 2 dreht sich auf einer stabilen Turmkonsole 1 und ist über einen Windsensor 8 und mittels eines Positionsmotors 3 windrichtungsgesteuert (Yaw). Somit wird ein Rotorkreis 6, 6' stets optimal zur Windrichtung gestellt.

Die Fig. 2 zeigt die Windturbine 7 mit einem Generator 9, einem Rotorblatt 10 mit einem Rotorkreis 6, montiert auf dem horizontalen Turbinenträger 5. Der horizontale Turmträger 5 ist über eine Turmstütze 4 mit einem Drehgestell 2 verbunden, welches auf einer stabilen Turmkonsole 1 montiert ist.

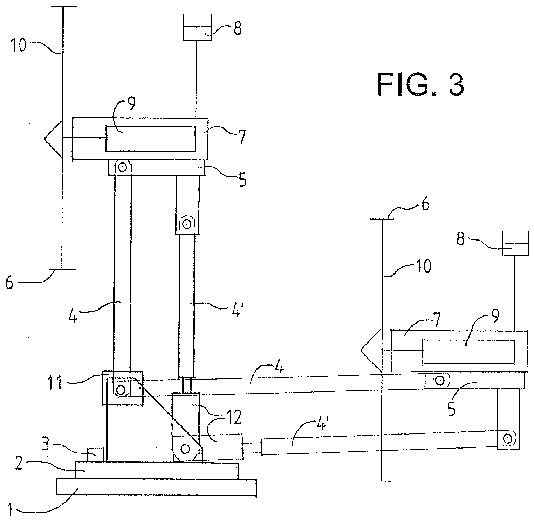

Die Fig. 3 zeigt eine absenkbare Windturbine 7, welche bei sehr heftigem Unwetter oder im Servicebereich vorteilhaft ist. Die Absenkung geschieht parallel mit den Turmstützen 4, 4' durch einen Antrieb 11. Die Lage der Windturbine 7 kann mit einer Längenverstellung 12 verändert werden.

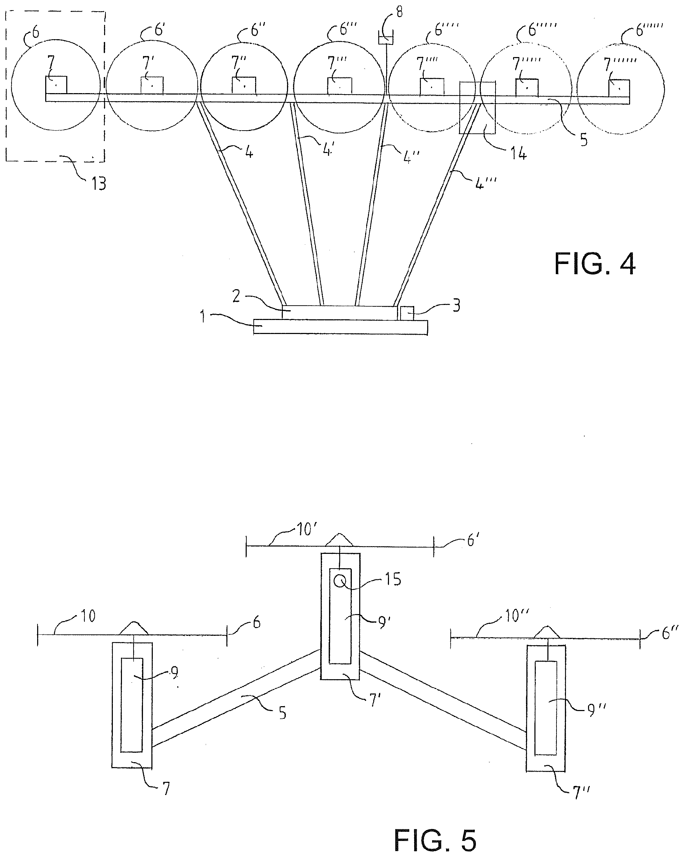

Die Fig. 4 zeigt eine Turbinenanlage, wo gemäss einer Ausführungsform sieben Windturbinen 7, 7', 7", 7''', 7"", 7""', 7""" auf einem horizontalen Turbinenträger 5 montiert sind. Vorteilhaft kann dies mit einer modularen Bauweise nach Baukastenprinzip 13 erfolgen.

Die Fig. 5 zeigt eine Turbinenanlage wo gemäss einer Ausführungsform drei Windturbinen 7, 7', 7" auf einem horizontalen Turbinenträger 5 montiert sind. Eine linke Windturbine 7 und eine rechte Windturbine 7" sind bezüglich einer mittleren Windturbine (7') in Windrichtung nach hinten versetzt. Ein Drehpunkt 15 bei der mittleren Windturbine 7' trägt dazu bei, dass sich diese Turbinenanlage selbständig und nur mit Windkraft zur Windrichtung stellen kann.

## Patentansprüche

1. Windturbinenanlage mit einem auf Turmstützen (4, 4', 4", 4"') getragenen Turbinenträger (5), **dadurch gekennzeichnet, dass** auf dem Turbinenträger (5) mindestens zwei Turbinen (7, 7', 7", 7"', 7"", 7""', 7""") vorgesehen sind, und die Turmstützen (4, 4', 4", 4"') drehbar mit einem Drehgestell (2) auf einer Turmkonsole (1) angeordnet sind.

2. Windturbinenanlage gemäss Anspruch 1, **dadurch gekennzeichnet, dass** sich der Turbinenträger (5) über das Drehgestell (2) um die vertikale Achse drehen kann.

3. Windturbinenanlage gemäss Anspruch 1 oder 2 **dadurch gekennzeichnet, dass** der Turbinenträger (5) sich um die vertikale Achse zur Windnachführung Yaw mittels eines Windsensors (8) drehbar über ein Drehgestell (2) mit einem Positionsmotor (3) dergestalt zur Windrichtung steuern kann, dass die Turbinen (7, 7', 7", 7"', 7"", 7""', 7""") stets eine Rotorachse aufweisen, welche senkrecht zur Windrichtung verläuft.

4. Windturbinenanlage gemäss einem der Ansprüche 1 bis 3 **dadurch gekennzeichnet, dass** der Turbinenträger mit den Turbinen (7, 7', 7", 7"', 7"", 7""', 7""") über gelenkig als Parallelogramm ausgestaltete Turmstützen (4, 4', 4", 4"') mit einem Antrieb (11) absenkbar ausgestaltet ist.

5. Windturbinenanlage gemäss Anspruch 4 **dadurch gekennzeichnet, dass** eine Nickachse der Turbinen (7, 7', 7", 7"', 7"", 7""', 7""") mittels Längenverstellung (12) über die Turmstütze (4') einstellbar ausgestaltet ist.

6. Windturbinenanlage gemäss einem der Ansprüche 1 bis 5 **dadurch gekennzeichnet, dass** Turbinenträger (5), Turmstützen (4, 4', 4", 4'") und Turbinen (7, 7', 7", 7'" , 7"", 7""', 7""") modular nach Baukastenprinzip (13) ausgestaltet sind.

7. Windturbinenanlage gemäss einem der Ansprüche 1 bis 6 oder Ansprüchen 1, 4, 5 und 6, **dadurch gekennzeichnet, dass** die Turmstützen (4, 4', 4", 4"') in einem Zwischenraum (14) zwischen den Rotorkreisen (6, 6', 6", 6"', 6"", 6""', 6""") der Turbinen (7, 7', 7", 7"', 7"", 7""', 7""") angeordnet sind.

8. Windturbinenanlage nach einem der Ansprüche 1 bis 7, **dadurch gekennzeichnet, dass** die Windkraftturbine so ausgestaltet ist, dass die Windkraft selbst die Windnachführung Yaw übernimmt, insbesondere über einen Drehpunkt (15) bei einer mittigen Turbine (7').

9. Windturbinenanlage gemäss Anspruch 1 bis 7, **dadurch gekennzeichnet, dass** die Windturbinenanlage über die Turmkonsole (1) On- sowie Offshore einsetzbar ist.

10. Windturbinenanlage gemäss Anspruch 1 bis 7, **dadurch gekennzeichnet, dass** die Windturbinenanlage über die Turmkonsole (1) auf einem Schiff einsetzbar ist.

## Claims

1. Wind turbine installation comprising a turbine carrier (5) which is supported on tower supports (4, 4', 4", 4"'), **characterized in that** at least two turbines (7, 7', 7", 7"', 7"", 7""', 7""") are provided on the turbine carrier (5) and the tower supports (4, 4', 4", 4"') are arranged rotatably by means of a rotating pedestal (2) on a tower console (1).

2. Wind turbine installation according to Claim 1, **characterized in that** the turbine carrier (5) can rotate about the vertical axis via the rotating pedestal (2).

3. Wind turbine installation according to Claim 1 or 2, **characterized in that** the turbine carrier (5) can be positioned rotatably about the vertical axis for yaw adjustment by means of a wind sensor (8) via a rotating pedestal (2) with a position motor (3) in relation to the wind direction in such a way that the turbines (7, 7', 7", 7"', 7"", 7""', 7""") always have a rotor axis which extends perpendicular to the wind direction.

4. Wind turbine installation according to one of Claims 1 to 3, **characterized in that** the turbine carrier with the turbines (7, 7', 7", 7"', 7"", 7""', 7""") is designed to be lowerable by means of a drive (11) via tower supports (4, 4', 4", 4"') designed in an articulated manner as a parallelogram.

5. Wind turbine installation according to Claim 4, **characterized in that** a pitch axis of the turbines (7, 7', 7", 7"', 7"", 7""', 7""") is designed to be adjustable by means of a length adjuster (12) via the tower support (4').

6. Wind turbine installation according to one of Claims 1 to 5, **characterized in that** turbine carrier (5), tower supports (4, 4', 4", 4"') and turbines (7, 7', 7", 7"', 7"", 7""', 7""") are designed to be modular according to the modular principle (13).

7. Wind turbine installation according to one of Claims 1 to 6 or Claims 1, 4, 5 and 6, **characterized in that** the tower supports (4, 4', 4", 4"') are arranged in an interspace (14) between the rotor circles (6, 6', 6", 6"', 6"", 6""', 6""") of the turbines (7, 7', 7", 7"', 7"", 7""', 7""").

8. Wind turbine installation according to one of Claims 1 to 7, **characterized in that** the wind power turbine is designed in such a way that the wind force itself undertakes the yaw adjustment, in particular via a point of rotation (15) in a central turbine (7').

9. Wind turbine installation according to Claims 1 to 7, **characterized in that** the wind turbine installation can be used on- and offshore via the tower console (1).

10. Wind turbine installation according to Claims 1 to 7, **characterized in that** the wind turbine installation can be used on a ship via the tower console (1).

## Revendications

1. Éolienne comprenant un support de turbine (5) supporté sur des montants de tour (4, 4', 4", 4'''), **caractérisée en ce qu'**au moins deux turbines (7, 7', 7", 7"', 7"", 7""', 7""") sont prévues sur le support de turbine (5), et les montants de tour (4, 4', 4", 4"') sont disposés de manière à pouvoir tourner avec un bâti tournant (2) sur une console de tour (1).

2. Éolienne selon la revendication 1, **caractérisée en ce que** le support de turbine (5) peut tourner autour de l'axe vertical par le biais du bâti tournant (2).

3. Éolienne selon la revendication 1 ou 2, **caractérisée en ce que** le support de turbine (5) peut se commander de manière rotative autour d'un axe vertical pour suivre la direction du vent en lacet par rapport à la direction du vent au moyen d'un capteur de vent (8) par le biais d'un bâti tournant (2) avec un moteur de position (3) de telle sorte que les turbines (7, 7', 7", 7"', 7"", 7""', 7""") présentent toujours un axe de rotor qui s'étend perpendiculairement à la direction du vent.

4. Éolienne selon l'une quelconque des revendications 1 à 3, **caractérisée en ce que** le support de turbine avec les turbines (7, 7', 7", 7"', 7"" 7""' 7""") est configuré de manière à pouvoir être abaissé avec un entraînement (11) par le biais de montants de tour (4, 4', 4", 4"') configurés de manière articulée sous forme de parallélogramme.

5. Éolienne selon la revendication 4, **caractérisé en ce qu'**un axe de tangage des turbines (7, 7', 7", 7"', 7"", 7""', 7""") est configuré de manière à pouvoir être ajusté par réglage longitudinal (12) par le biais du montant de tour (4').

6. Éolienne selon l'une quelconque des revendications 1 à 5, **caractérisée en ce que** le support de turbine (5), les montants de tour (4, 4', 4", 4"')et les turbines (7, 7', 7", 7"', 7"", 7""', 7""") sont configurés de manière modulaire selon le principe des caissons modulaires (13).

7. Éolienne selon l'une quelconque des revendications 1 à 6 ou selon les revendications 1, 4, 5 et 6, **caractérisée en ce que** les montants de tour (4, 4', 4", 4"') sont disposés dans un espace intermédiaire (14) entre les circuits de rotor (6, 6 ' , 6", 6"', 6"", 6""', 6""") des turbines (7, 7', 7", 7"', 7"", 7""', 7""").

8. Éolienne selon l'une quelconque des revendications 1 à 7, **caractérisée en ce que** l'éolienne est configurée de telle sorte que la force du vent assure elle-même le suivi de la direction du vent en lacet, en particulier par le biais d'un centre de rotation (15) dans le cas d'une turbine centrale (7').

9. Éolienne selon les revendications 1 à 7, **caractérisée en ce que** l'éolienne peut être utilisée à terre ou en mer par le biais de la console de tour (1).

10. Éolienne selon les revendications 1 à 7, **caractérisée en ce que** l'éolienne peut être utilisée sur un bateau par le biais de la console de tour (1).
